# EUROPEAN PATENT APPLICATION

(11) **EP 1 262 690 A2**
(43) Date of publication of application: **04.12.2002**
(21) Application number: 02011989.7
(22) Date of filing: 30.05.2002
(51) Int. Cl.: F16H 61/00, F16H 55/56

(54) **Mechanical device to convert a continuous variable transmission to a sequential transmission on a vehicle**

(30) Priority: 30.05.2001 IT PI20010041
(71) Applicant: Doveri, Marco, I-56025 Pontedera (Pisa) (IT)
(72) Inventor: Doveri, Marco, I-56025 Pontedera (Pisa) (IT)
(74) Representative: Celestino, Marco

(57) **Abstract**

On a vehicle with a CVT the gear ratio can also be controlled with exclusively mechanical means at the choice of the driver. The transmission comprises a first and a second pulley sheave (10,11) mounted on a portion (1a) of the crankshaft (1) of the vehicle, a V belt (28) that engages between the first and second pulley sheave (10,11) and operates a driven shaft, a plurality of pushing elements (8) which, by means of centrifugal force push a pulley sheave towards the other whereby the position changes of the belt (28) between the two pulley sheaves and then the gear ratio. Lock means (7) are provided movable between a first and a second position. In the first position the lock means (7) leave free the pushing elements (8) whereby there is an automatic operation as CVT. In the second position, instead, the lock means (7) block the movement of the pushing elements (8) so that even if the centrifugal force changes they are still. Means for moving the first pulley sheave (10) and the second pulley sheave (11) w.r.t. each other when the lock means (7) is in the second position are furthermore present, whereby the gear ratio can be changed sequentially by displacing relatively the first pulley sheave (10) and the second pulley sheave (11). The gear ratio is controlled by the rotation of a handle control of the handlebar, with possibility of a different gear ratio for every position of the handle control or, through a special pre-selector, having a different selected gear ratio at every step rotation of the handle control in either direction.

## Description

### Field of the invention

The present invention relates to the field of motor vehicles/motor cycles and more precisely it relates to a mechanical device to convert a Continuous Variable Transmission to a sequential transmission on a vehicle.

### Description of the prior art

Vehicles are known equipped with Continuous Variable Transmission or CVT. For example, a CVT for motorcycles is described in WO/00/65252 or in EP0756110.

Automatic gearboxes are also known that can be used, with special devices, as sequential transmission. The special device is generally similar to a foot lever gearshift with pre-selector of motorcycles, that converts forward or back movement to a long or short drive, and the lever is located in the same position of a traditional gearbox. This system can be operated hydraulically or electrically, but in any case it has considerable complexity and cost.

Other CVT devices allow the passage to a direct drive, even if the gear ratio in the direct drive cannot be changed, as described in US5827146.

### Summary of the invention

It is an object of the present invention to provide a CVT in which the gear ratio can also be controlled with exclusively mechanical means at the choice of the driver.

It is also object of the present invention to provide a CVT for motorcycles that allows a gear change also of sequential type, wherein the gear ratio is controlled by the rotation of a handle control of the handlebar, with possibility of having a different gear ratio for every position of the handle control or, through a special pre-selector, to trigger a change of gear at every rotation of the handle control in either direction.

These and other objects are achieved according to the invention by a mechanical device to convert a Continuous Variable Transmission to a sequential transmission on a vehicle; the transmission comprises a first and a second pulley sheave mounted on a portion of the drive shaft of the vehicle, a V belt that engages between the first and second pulley sheaves and operates a driven pulley, a plurality of pushing elements which, by means of centrifugal force push a pulley sheave towards the other to change the position of the belt between the pulley sheaves and then the gear ratio,
its characteristic being that the following are further provided
lock means movable between a first and a second position, in the first position the lock means leaving the pushing elements free and the device operates as CVT, in the second position the lock means block the movement towards the outside of the pushing elements so that they are still even if the centrifugal force changes, and
means for moving relatively the first pulley sheave and the second pulley sheave w.r.t. each other when the lock means is in the second position, whereby the gear ratio can be changed sequentially by displacing relatively the first pulley sheave towards the second pulley sheave.

Advantageously, the lock means belong to a ring integral to a stem housed coaxially in said portion of the driving shaft, means being provided for moving the stem from a first to a second position so that the lock means move from the first to the second position.

Preferably, the ring touches the first pulley sheave when the lock means are in the second position, whereby the means for moving relatively the first pulley sheave and the second pulley sheave w.r.t. each other consist in the ring that pushes against the first pulley sheave and the stem in the passage from the second position to the third position. A spring can be provided that pushes the stem from the first to the third position.

Preferably, the pushing elements are centrifugal rollers and the lock means are pins that engage against the centrifugal rollers blocking them radially.

Advantageously, the device comprises first means for moving the stem from the first to the second position and second means for moving the stem from the second to the third position, a commutation unit being provided for connecting selectively the stem to the first or second means for moving when the stem is in the second position.

Preferably, the first means for moving comprises a lever that can be operated by the driver for moving the stem from the first to the second position. If the vehicle is a motorcycle, the second means for moving consist in a handle control of the handlebar, in particular the left handle control.

The commutation unit comprises a first arm, that can be operated by the lever, and a second arm, that can be operated by the handle control, which is pivotally connected independently about a common pivot, the pivot engaging with a connecting rod that operates the stem, to the pivot a disk being integral that extends in a plane parallel to the first and second arm and that engages selectively with the first and second arm in predetermined angular positions.

In a preferred embodiment, the commutation unit comprises:
- a first arm to which the lever is connected, free to rotate on the pivot, urged to rotate clockwise by a spring and having an extension with the shape of tubular sector;
- a disk integral to the pivot and having an extension suitable to touch the first arm, whereby the pivot cannot rotate for allowing the passage of the stem from the first to the second position until the first arm is not in turn rotated;
- a second arm, which is also pivotally connected to the pivot, operated through the rotation of the handle control on the handlebar, and having a lever on it articulated, the passage of the tubular sector on the lever causing the disk to hook the second arm, whereby the handle control can operate the rotation of the pivot and then the movement of the stem from the second to the third position.

### Brief description of the drawings

Further characteristics and the advantages of the device according to the present invention will be made clearer with the following description of an embodiment thereof, exemplifying but not limitative, with reference to attached drawings wherein:
- figure 1A shows a cross sectional view of a Continuous Variable Transmission that comprises the device according to the invention in a first operative position;
- figures 1B and 1C show the transmission of figure 1A with the device respectively in a second and in a third operative position;
- figure 2 shows a cross sectional view of an commutation unit making part of the device according to the invention;
- figures 3A - 3C show the commutation unit of figure 2 sectioned according to plane III of figure 2 in three operative positions, of which figure 3A corresponds to the first position of the device (figure 1A) and figures 3B-3C correspond to the second position of the device (figure 1B-1C)
- figures 4A - 4C show the commutation unit of figure 2 sectioned according to the plane IV of figure 2 in three operative positions, of which figure 4A corresponds to the first position of the device (figure 1A) and figures 4B-4C correspond to the second position of the device (figure 1B-1C)
- figures 5A - 5B show the commutation unit of figure 2 sectioned according to plane V of figure 2 in two operative positions of which figure 5A corresponds to the second position of the device (figure 1B) and figure 5B correspond to the third position of the device (figure 1C).

### Description of a preferred embodiment

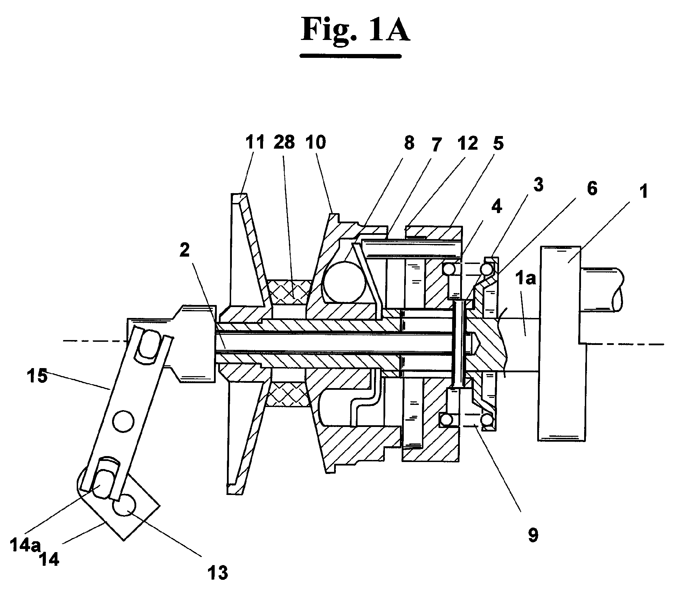

With reference to figure 1A, in a motorcycle a Continuous Variable Transmission, or CVT causes the gear ratio to operate both automatically and sequentially, as well as to be switched between these two modes, by exclusively mechanical means. In figure 1A the device is shown in the shortest speed ratio, or first drive.

The transmission comprises a first and a second pulley sheaves, respectively 10 and 11, mounted on a portion 1A of crankshaft 1 of the vehicle motor. A V belt 28 engages between the first pulley sheave 10 and second pulley sheave 11 and operates a driven shaft not shown.

As known in the art, a plurality of rollers 8, by means of centrifugal force, push the pulley sheave 10 towards the other pulley sheave 11 so that the position of the belt 28 and then the gear ratio change.

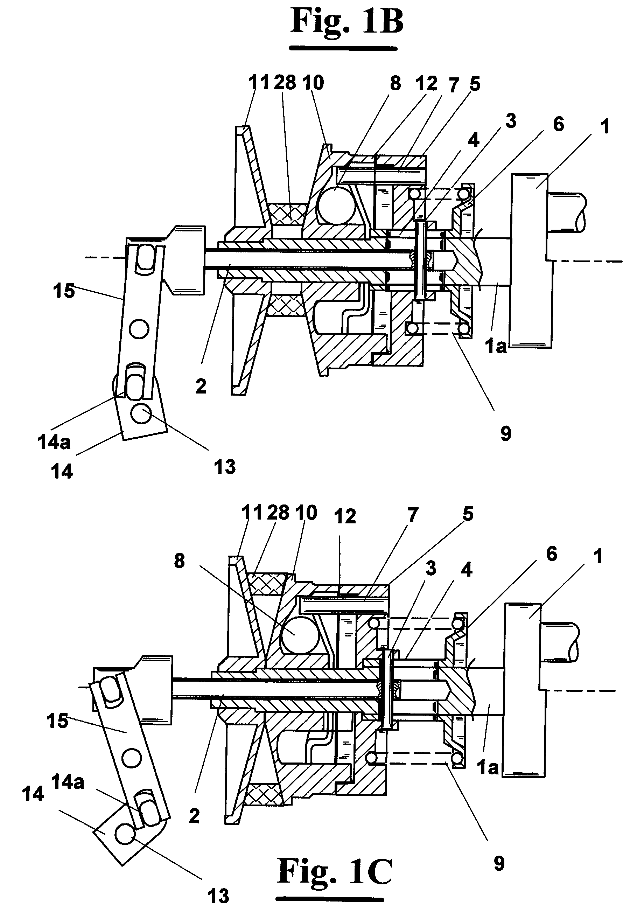

According to the invention, locking pins 7 are provided movable between the first position of figure 1A and the second position of figure 1B. In the first position the pins 7 leave rollers 8 free so that there is a normal automatic operation of the transmission as CVT, whereas in the second position the pins 7 block the movement of rollers 8 so that they cannot move as the centrifugal force varies. In this condition (figure 1B) there is a fixed gear ratio for a desired speed of the motor.

The portion 1a of crankshaft 1 of the motor has an axial hole at its end where a stem 2 is slidingly housed, which, through a pin 3 and two slots 4, engages with a sliding ring 5. Two slots are also made to let pin 3 to pass through a guide element 6 integral to shaft 1, which is a guide to ring 5 and blocks a spring 9.

Pins 7 belong to ring 5 that moves integrally to stem 2 coaxially to driving shaft 1. If sliding ring 5 is displaced towards the right thus compressing spring 9, pins 7 are this way disengaged from rollers 8 and the gearbox operates as CVT (figure 1A).

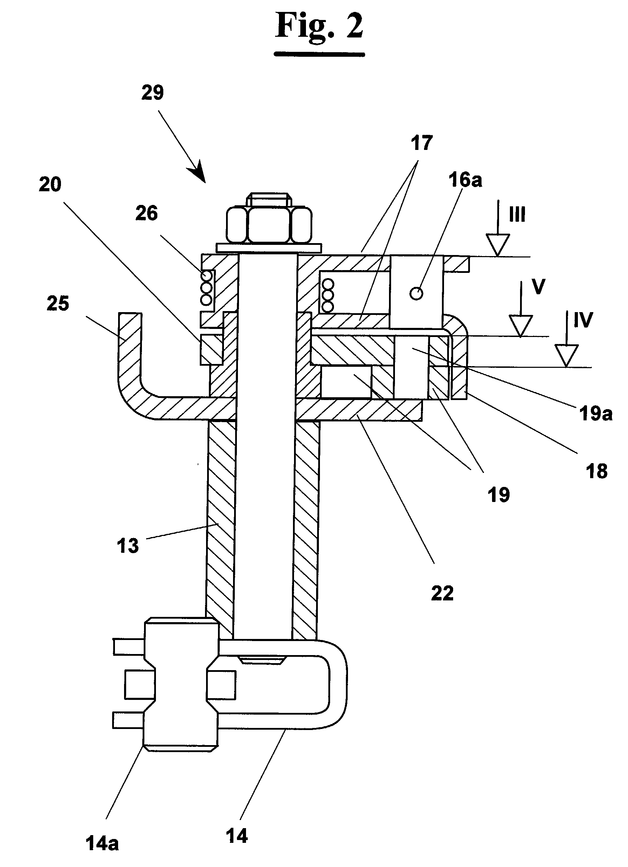

The task of spring 9 is that to help movement of stem 2 towards the left in case of a manual operation, like in the present invention, in particular when the longest speed ratios have to be switched on by the rotation of the handle control on the handlebar. The presence of a spring requires, on one hand, a high actuating force to pass from the position of figure 2 to the automatic position of figure 1; in this direction acts also the force of pulley sheave 10 owing to belt 28 action, caused by a not shown spring on the driven pulley.

To displace stem 2 from the first position of figure 1A to the second position of figure 1B an actuating lever 15 is provided that is moved in turn, through a lever 14, by an eccentric pin 14a, with respect to the axis of a pivot 13. By rotating pivot 13 in a counter clockwise direction, stem 2 is moved towards right (first position of figure 1) with CVT operation.

Instead, starting from second position of figure 1B, when pivot 13 is rotated in clockwise direction, stem 2 is moved towards left, so that first pulley sheave 10 can be moved towards second pulley sheave 11, thus changing the gear ratio sequentially at the choice of the driver towards log gear ratios (figure 1C).

In order to obtain that by a movement of stem 2 towards left starting from second position of figure 2, ring 5 touches first pulley sheave 10 along its boundary 12, after that locking pins 7 are in the second position. Every further movement of stem 2 that pushes against first pulley sheave 10 causes it to move from second position of figure 1A to third position of figure 1C. A desired intermediate position between them corresponds to a different gear ratio.

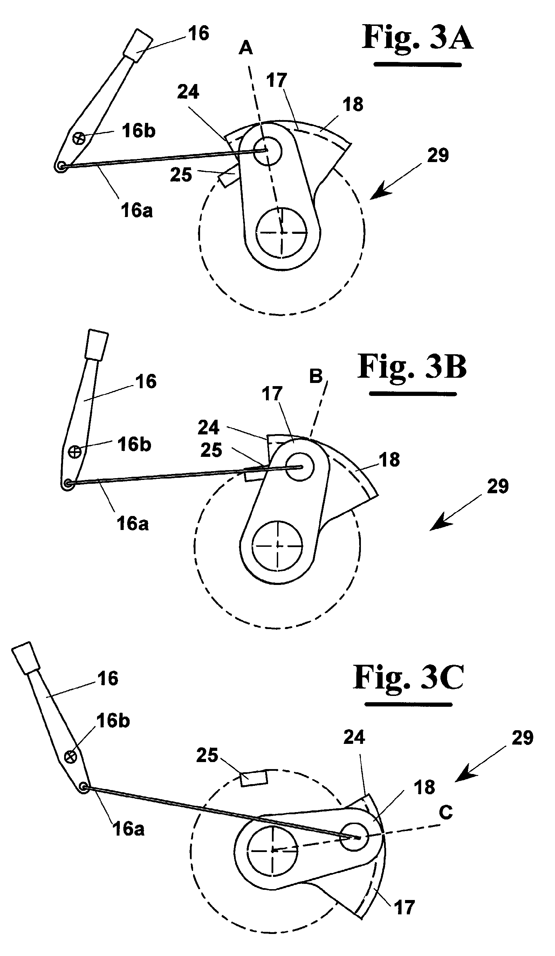

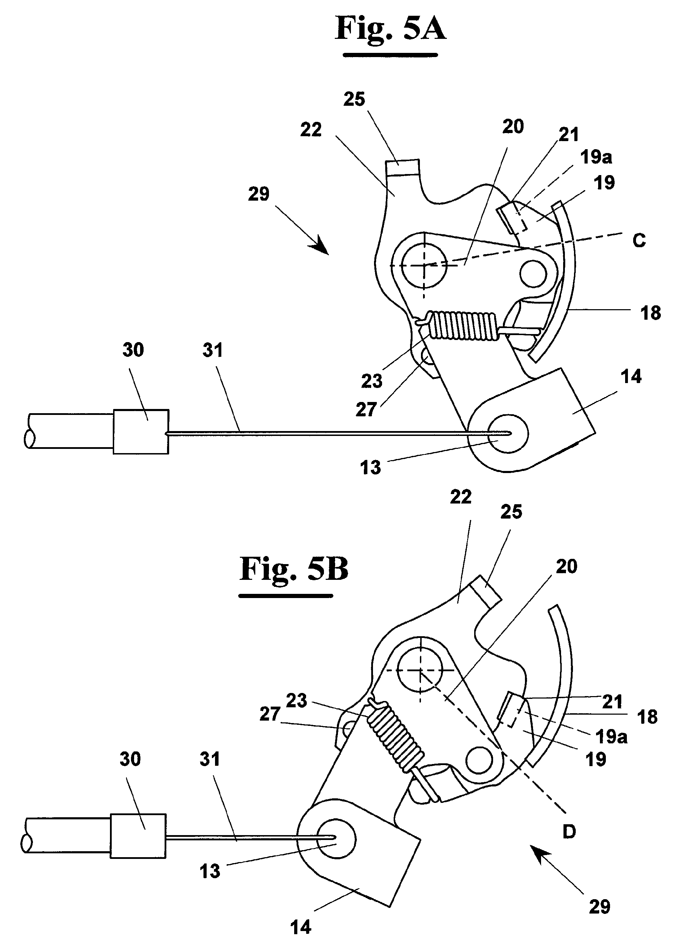

Always according to the invention, stem 2 is moved in two different ways: either with rotation of handle control 30 of handlebar, for sequential variation of the gear ratio (figures 5A and 5B), or with a lever 16, for passage from sequential to automatic way and vice versa (figure 3C-3A 4C-4A)

With reference to figure 2, a commutation unit 29 is provided, for connecting selectively stem 2 to lever 16 or to handle control 30 when it is in the second position of figure 2.

As shown in figure 3, lever 16 can be operated directly by the driver to move the stem from the first to the second position. More precisely, rotation of pivot 13 through is caused either by commutation unit 29, through the movement of lever 16 and a Bowden cable 16a, or by the rotation of the handle control 30 on the handlebar, through a Push-Pull link 31.

The two commands 16 and 30 cannot be connected directly to pivot 13, because when the gearbox is operated sequentially lever 16 must be still, and when stem 2 moves to switch the gearbox from sequential operation at short gear ratios (figure 2) into automatic operation (figure 1), it would be ergonomically negative that handle control 30 on the handlebar continues to rotate.

Lever 16 has two rest positions, that of figure 3A for automatic operation and that of figure 3C for sequential operation. Between these two' positions the intermediate position of figure 3B that corresponds to the position of figure 1B where, through rotation of pivot 13, of lever 15 and movement of stem 2, ring 5 contacts at 12 pulley sheave 10. A further stroke of lever 16 from position of figure 3B to position of figure 3C does not cause any further movement in stem 2, but causes commutation unit 29 to be switched to operation by handle control 30 on handlebar and not by lever 16, which remains still.

Commutation unit 29 has:
- a first arm 17 to which lever 16 is connected with Bowden cable 16a, free to rotate on pivot 13, urged to rotate by a spring 26 in clockwise direction from position of figure 3A to that of figure 3C, and having an extension 18 with shape of tubular sector ;
- a second arm 20, which is also hinged about pivot 13, operated through a push-pull link 31 under rotation of handle control 30 on the handlebar, and having a lever 19 articulated on it;
- a disk 22 integral to pivot 13 and having an extension 25 suitable to touch first arm 17.

First arm 17, according to the actual angular position A,B,C,D, has a tubular sector 18 which, as shown in figures from 4A to 5B, causes a protrusion 19a of lever 19 to engage in a recess 21, made in disk 22, urged by a spring 23, so that second arm 20 is integral with disk 22. Second arm 20 can then operate stem 2 when lever 19 makes it integral with disk 22 (figure 5A, 5B).

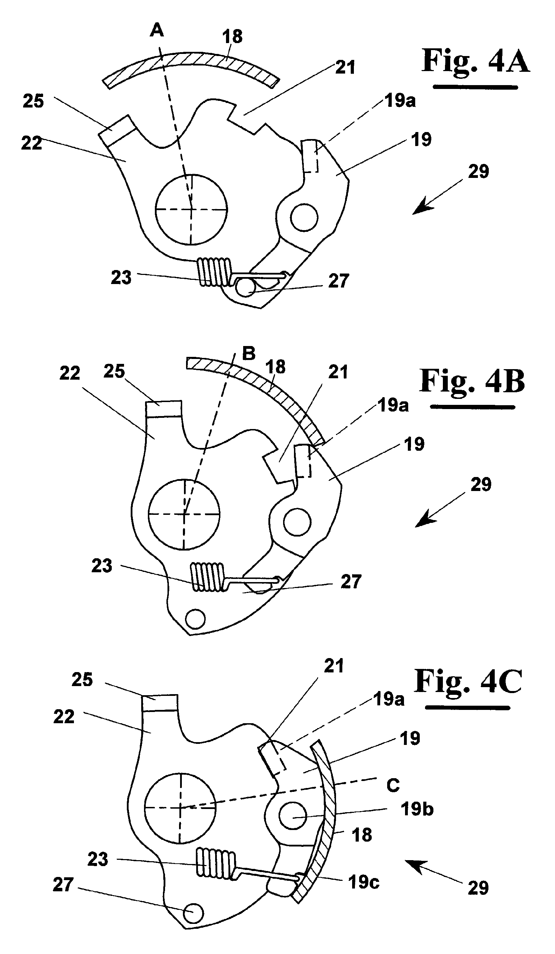

When sector 18 does not face lever 19 and i.e. when first arm 17 is brought by lever 16 to position B (figure 4B), spring 23 causes lever 19 to rotate towards outside, unimpeded by sector 18, so that protrusion 19a disengages from recess 21 and lever 19 is free from disk 22.

A further movement of first arm 17 by lever 16, from B towards A, causes edge 24 of first arm 17 (figure 3B-3A), which in B contacts extension 25 of disk 22, to bring into counterclockwise rotation disk 22 and pivot 13. Therefore, the transmission moves to the first position of figure 1A, with operation as CVT. Lever 16 can at this point being hooked to a special pawl and the device remains in this position.

When instead lever 16 is released, first arm 17, pushed by springs 9 and 26, rotates clockwise up to position B of figure 3B, bringing the transmission to the second position of figure 1B. At this point, the clockwise rotation of first arm 17 continues, urged by spring 26. Edge 24 of first arm 17 frees protrusion 25, whereas tubular sector 18 pushes lever 19 causing second arm 20 to be integral to disk 22. The rotation ends when first arm 17 has arrived at position C of figures 4C and 5A. Tubular sector 18 faces lever 19, urging it in recess 21 for all the angle from C to D about which second arm 20 moves, when operated by handle control 31, thus shifting the transmission from the short gear ratio of figure 1B to the long gear ratio of figure 1C, through any intermediate position.

In order to avoid that, during automatic operation, second arm 20 operated by handle control 30 on handlebar is accidentally moved away from position of first gear ratio, on disk 22 (figure 4A) a pin 27 is provided, against which the end of lever 19 would hit if it, by means of second arm 20, is caused to rotate clockwise. Since disk 22 is blocked by lever 16 in the automatic operation position, this rotation cannot be accomplished.

The advantageous aspects of the transmission according to invention are the following:
- a CVT normally used in automatic operation, can be controlled also manually, without hydraulic, electrical or other apparatus if not exclusively mechanical means;
- to switch from automatic to manual operation a lever 16 is provided that, with its movement, both blocks with mechanical means 7 centrifugal masses 8 of CVT and connects the device to handle control 30, for manual variation of the gear ratio;
- the connection of the drive to the handle control is reliable and easy to make; it is made as above described through engagement of lever 19 to disk 22, so that with a single movement both disk 22 and eccentric pin 14 are integral to second arm 20, as well as lever 15 and stem 2 that cause pulley sheaves 10 and 11 to move towards and away from each other;
- spring 9 urges movable pulley sheave 10 with a force that makes easier the passage from a short gear ratio to a longer gear ratio increasing the virtual diameter of belt 28; this force compensates as far as possible, approaching it without overcoming it, the force of a belt tightening spring (not shown) present on driven pulley. Spring 9 allows a minimum effort to approach the pulley sheaves, by the only manual rotation of the handle control on the handlebar.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. A mechanical device to convert a Continuous Variable Transmission to a sequential transmission on a vehicle, said transmission comprising a first and a second pulley sheave (10,11) mounted on a portion (1a) of the drive shaft (1) of the vehicle, a V belt (28) that engages between said first and second pulley sheave (10,11) and operates a driven shaft, a plurality of pushing elements (8), which by means of centrifugal force push a pulley sheave towards the other, whereby the position changes of said belt (28) between said pulley sheaves, and then the gear ratio changes,
**characterised in that** the following are further provided:
- lock means (7) movable between a first and a second position, in said first position said lock means (7) leaving free said pushing elements (8) thus allowing an automatic operation as CVT of the transmission, whereas in said second position said lock means (7) block the movement of said pushing elements (8) so that even if the centrifugal force changes they are still, and
- means for moving said first pulley sheave (10) towards said second pulley sheave (11) when said lock means (7) is in said second position, whereby the gear ratio can be changed sequentially by displacing relatively said first pulley sheave (10) towards said second pulley sheave (11).

2. Device according to claim 1, wherein said lock means (7) belong to a ring (5) integral to a stem (2) coaxial to said portion (1a) of the drive shaft (1), means being provided for moving said stem (2) from a first to a second position so that said lock means (7) move from said first to said second position.

3. Device according to claim 2, wherein said ring (5) touches said first pulley sheave (10) when said lock means (7) are in the said second position, whereby said means for moving said first pulley sheave (10) towards said second pulley sheave (11) consist in said stem (2) in the passage from said second position to a third position, where said ring (5) pushes directly against said first pulley sheave (10).

4. Device according to claim 3, wherein a spring (9) is provided that urges in parallel said stem from said first to said third position.

5. Device according to claim 1, wherein said pushing elements (8) are centrifugal rollers and said lock means (7) are pins that engage against said centrifugal rollers blocking them radially.

6. Device according to claim 1, wherein first means for moving (16) for displacing said stem (2) from said first to said second position, and second means for moving (30) are provided for displacing said stem (2) from said second to said third position, a commutation unit being provided (29) for connecting selectively said stem (2) to said first or second means for moving (16,30) when said stem (2) is located in said second position.

7. Device according to claim 6, wherein said first means for moving comprises a lever (16) that can be operated by the driver for moving the stem (2) from the first to the second position.

8. Device according to claim 6, wherein if the vehicle is a motorcycle said second means for moving consist in a handle control of the handlebar, in particular the left handle control.

9. Device according to claim 6, wherein said commutation unit comprises a first arm (17), that can be operated by said first means for moving (16), and a second arm (20), that can be operated by said second means for moving (30), said first and second arm (17,20) being hinged independently about a common pivot (13), said pivot (13) operating directly said stem (2), to said pivot (13) a disk being integral (22) that extends in a plane parallel to said first and second arm (17,20) and that engages selectively with said first and second arm (17,20) in predetermined angular positions.

10. Device according to claim 6, wherein said commutation unit comprises:
- a first arm (17) to which the first means for moving (16) is connected, free to rotate on the pivot (13), urged to rotate clockwise by a spring (26), and having an extension (18) with the shape of a tubular sector;
- a disk (22) integral to the pivot (13) and having an extension (25) that in said first position rests (24) on said first arm (17), whereby the pivot (13) cannot rotate for allowing the passage of the stem (2) from the first to the second position until the first arm (17) is not in turn rotated;
- a second arm (20), which is also pivotally connected to the pivot (13), operated through the rotation of said second means for moving (30), and having a lever (19) on it articulated, the passage of said extension (18) sector on said lever (19) causing the disk (22) to hook said second arm (20), whereby by said second means for moving it is possible the rotation of said pivot and then the movement of said stem (2) from said second to said third position;
- the first arm (17) engaging with the disk (22) to allow that, in said first position, a protrusion of said lever (19), unimpeded by said extension (18), engages against the first arm (17) for preventing it from undesired operation of said second means for moving (30).
